# FASCICULE DE BREVET EUROPEEN

(11) **EP 3 798 041 B1**
(45) Date de publication et mention de la délivrance du brevet: **18.01.2023**
(21) Numéro de dépôt: 20186593.8
(22) Date de dépôt: 17.07.2020
(51) Int. Cl.: B60L 7/10

(54) **CHARGEUR NOMADE POUR BATTERIES AVEC ROUE D'INERTIE**
NOMADIC LADEGERÄT FÜR BATTERIEN MIT SCHWUNGRAD
NOMADIC CHARGER FOR BATTERIES WITH FLYWHEEL

(43) Date de publication de la demande: 31.03.2021
(73) Titulaire: Badanjak, Claude, 93600 Aulnay-sous-Bois (FR)
(72) Inventeur: Badanjak, Claude, 93600 Aulnay-sous-Bois (FR)

(56) Documents cités:
- EP-A1- 2 821 271
- FR-A1- 2 958 225
- FR-A1- 2 985 229
- JP-A- 2013 189 134

## Description

L'appareil en question est une amélioration, concernant la demande des brevets français N° FR2011/1001338, EP2821271A1 et le brevet PCTWO2011/124776 lequel décrit le fonctionnement d'un appareil élémentaire, visant à résoudre le problème de l'autonomie des véhicules électriques; actuellement strictement dépendants des bornes de recharge, ou des prises électriques domestiques trop rares ou nécessitant les temps de charges plutôt longues, ainsi qu'économiser sur le volume des batteries nécessaires au fonctionnement du véhicule plutôt onéreux.

L'Invention en question est destinée à récupérer de l'énergie cinétique du véhicule électrique, à l'aide des ressorts-moteur, qui actionnent des roues d'inertie couplées au rotor d'un alternateur, afin de recycler et maintenir la charge des batteries à un niveau suffisant, pour effectuer des déplacements de longue distance en marche 100% électrique, prolongeons considérablement l'autonomie, puis permettre de faire fonctionner des différents consommateurs d'électricité ainsi que réduire le volume des batteries nécessaires au fonctionnement du véhicule.

L'appareil est monté de manière à être en liaison avec un axe tournant du véhicule électrique en mouvement par l'intermédiaire d'une roulette de caoutchouc (1), laquelle met en rotation un arbre flexible (2), lequel actionne, un réducteur des forces (3), et par l'intermédiaire des axes lanceur (4) pourvues des engrenages coniques (5) monté coulissantes-tournantes dans des pivots anti-retour (6), est précipité violemment en direction de l'axe d'un rotor (7) tout en faisant, un mouvement giratoire, dans le sens de rotation des roues d'inertie (9), qui est doté à chaque bout des empreintes (8.), pouvant recevoir les engrenages coniques (5), ce qui a pour conséquence de maintenir en rotation des roues d'inertie (9) en liaisons fixe avec l'axe de rotor (7) et un ensemble d'aimants faisant partie d'un rotor (10). Dans la même action et de façon alternée, le mouvement agis sur des coulisseaux (11) pour décocher une des gâchettes (12) pour faire échapper une des billes (13) et libérer brutalement l'un des ressorts-moteur (14) afin d'actionner l'un des engrenages coniques (5) pour assurer la permanence de rotation du rotor (10) et remonter en alternance l'autre des ressorts-moteur (14). En se libérant, le ressort-moteur (14) appuie sur un contrôleur de position (15), qui fait culbuter des tringleries (16) lesquelles agissant sur l'autre coulisseau (11), décoche la deuxième gâchette (12), pour échapper l'autre bille (13), et libérer l'autre ressort-moteur (14). Le fonctionnement de l'appareil; étant maintenue tout au long du trajet, la charge des batteries est gardée au plus haut niveau, ce qui est pour conséquence d'augmenter considérablement l'autonomie du véhicule électrique.

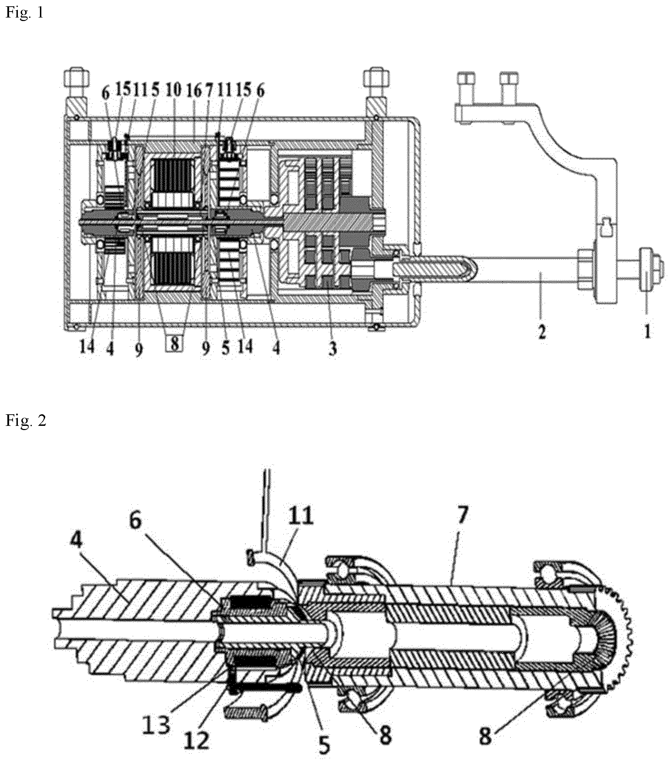

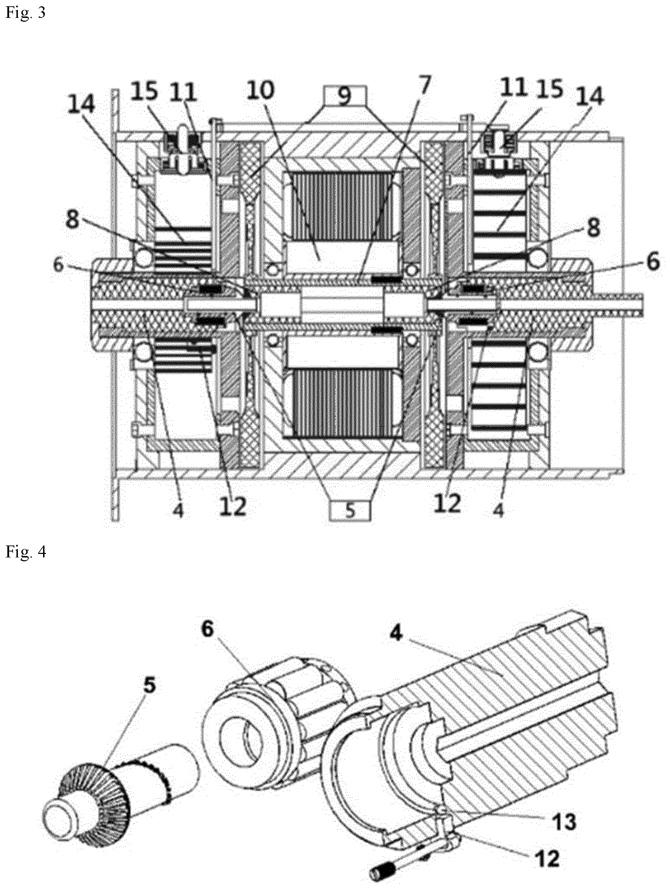

## Revendications

1. Dispositif de récupération de l'énergie cinétique d'un véhicule électrique **caractérisé en ce qu'**il est monté, de manière à être en liaison avec un axe tournant du véhicule électrique en mouvement par l'intermédiaire d'une roulette de caoutchouc (1) laquelle met en rotation un arbre flexible (2) lequel actionne, un réducteur des forces (3) et par l'intermédiaire des axes lanceur (4) pourvues des engrenages coniques (5) monté coulissants-tournants dans les pivots anti-retour (6) soit précipité violemment en direction de l'axe d'un rotor (7) tout en faisant, un mouvement giratoire, dans le sens de rotation des roues d'inertie (9), qui sont dotés à chaque bout des empreintes (8) pouvant recevoir les engrenages coniques (5) ce qui a pour conséquence de maintenir en rotation des roues d'inertie (9) en liaisons fixe avec l'axe de rotor (7) et un ensemble d'aimants faisant partie d'un rotor (10) et dans la même action et de façon alternée, le mouvement agis sur des coulisseaux (11) pour décocher une des gâchettes (12) pour faire échapper une des billes (13) et libérer brutalement l'un des ressorts-moteur (14) afin d'actionner l'un des engrenages coniques (5) pour garantir la permanence de rotation du rotor (10) et dans le même mouvement remonter en alternance l'autre des ressorts-moteur (14) lequel en libérant, le ressort-moteur (14) appuie sur l'un des contrôleur de position (15) qui fait culbuter des tringleries (16) lesquelles agissant sur l'autre coulisseau (11), décoche la deuxième gâchette (12) pour échapper l'autre bille (13) et libérer l'autre ressort-moteur (14).

2. Dispositif selon la revendication 1 **caractérisé en ce que** l'axes lanceur (4) est pourvu du pivot anti-retour (6) dans lequel est montés coulissant-tournant un engrenage conique (5).

3. Dispositif selon la revendication 1 **caractérisé en ce que** l'axes lanceur (4) munie des coulisseaux (11) lesquels, actionnés par les ressort-moteur (14) et commandé par les contrôleurs de position (15) collaborent en alternance avec les gâchettes (12) pour libérer l'un l'autre des ressorts-moteur (14) afin de lancer en rotation l'axes lanceur (4) et dans le même mouvement, faire coulisser axialement, les engrenages coniques (5).

4. Dispositif selon la revendication 1 et 3 **caractérisé en ce que** les engrenages coniques (5), soit précipité violemment en direction de l'axe du rotor (7) en s'insérant dans l'empreinte (8) et dans un mouvement giratoire, dans le sens de rotation des roues d'inertie (9) afin de forcer en permanence la rotation du rotor (10).

5. Dispositif selon la revendication 1 **caractérisé en ce que** les contrôleurs de position (15) font culbuter en alternance les tringleries (16) lesquelles agissant sur les coulisseaux (11) assurent l'alternance de fonctionnement des ressorts-moteur (14).

## Patentansprüche

1. Vorrichtung zur Rückgewinnung der kinetischen Energie eines Elektrofahrzeugs, die **dadurch gekennzeichnet ist, dass** sie so montiert ist, dass sie über ein Gummirad (1), das eine flexible Welle (2) dreht, die betätigt, einen Kraftreduzierer (3) und über die Startachsen (4) mit konischen Zahnrädern (5) mit konischen Zahnrädern versehen ist, die gleitend und rotierend in den Rücklaufdrehpunkten (6) montiert oder ausgefällt sind heftig in Richtung der Achse eines Rotors (7) während einer rotierenden Bewegung, in Drehrichtung der Trägheitsräder (9), die an jedem Ende mit den Vertiefungen (8) ausgestattet sind, die die konischen Zahnräder (5) aufnehmen können, was zur Folge hat, dass die Trägheitsräder (9) in fester Verbindung mit der Rotorachse (7) und einem Satz von Magneten, die Teil eines Rotors sind (10) und in derselben Aktion in Rotation gehalten werden, und Abwechselnd wirkt die Bewegung auf Schlitten (11), um einen der Auslöser (12) zu deaktivieren, um einer der Kugeln (13) zu entkommen und eine der Zugfedern (14) brutal freizugeben, um eines der konischen Zahnräder (5) zu betätigen, um die Dauerhaftigkeit der Rotation des Rotors (10) zu gewährleisten, und in derselben Bewegung abwechselnd die andere der Zugfedern (14) anzuheben, die durch Loslassen, Die Zugfeder (14) drückt einen der Positionsregler (15), der Gestänge (16) taumelt, die auf den anderen Schlitten (11) wirken, den zweiten Abzug (12) löst, um der anderen Kugel (13) zu entkommen, und die andere Zugfeder (14) freigibt.

2. Vorrichtung nach Anspruch 1 ist **dadurch gekennzeichnet, dass** die Startachsen (4) mit dem Nichtrückwendepunkt (6) versehen sind, in dem gleitend drehend ein konisches Zahnrad (5) montiert ist.

3. Vorrichtung nach Anspruch 1 **dadurch gekennzeichnet, dass** die mit den Schlitten (11) ausgerüsteten Startachsen (4), die, betätigt durch die Zugfedern (14) und gesteuert durch die Positionsregler (15), abwechselnd mit den Auslösern (12) zusammenarbeiten, um sich gegenseitig von den Zugfedern (14) zu lösen, um in Rotation die Trägerachsen (4) und in derselben Bewegung zu starten, axial gleiten die konischen Zahnräder (5).

4. Die Vorrichtung nach Anspruch 1 und 3 ist **dadurch gekennzeichnet, dass** die konischen Zahnräder (5) in Richtung der Achse des Rotors (7) heftig ausfallen, indem sie sich in die Grundfläche (8) und in einer rotierenden Bewegung in Drehrichtung der Trägheitsräder (9) einfügen, um die Rotation des Rotors (10) dauerhaft zu erzwingen.

5. Die Vorrichtung nach Anspruch 1 ist **dadurch gekennzeichnet, dass** die Lageregler (15) abwechselnd die gestänge (16), die auf die Schlitten (11) einwirken, den Betriebswechsel der Zugfedern (14) gewährleisten.

## Claims

1. Device for recovering the kinetic energy of an electric vehicle **characterized in that** it is mounted, so as to be connected to a rotating axis of the moving electric vehicle via a rubber wheel (1) which rotates a flexible shaft (2) which actuates, a force reducer (3) and via the launching axes (4) provided with conical gears (5) mounted sliding-rotating in the non-return pivots (6) or precipitated violently in the direction of the axis of a rotor (7) while making a rotating movement, in the direction of rotation of the inertia wheels (9), which are equipped at each end with the indentations (8) which can receive the conical gears (5) which has the consequence of keeping in rotation wheels of inertia (9) in fixed connection with the axis of rotor (7) and a set of magnets forming part of a rotor (10) and in the same action and alternately, the movement acts on slides (11) to uncheck one of the triggers (12) to escape one of the balls (13) and brutally release one of the mainsprings (14) in order to operate one of the conical gears (5) to guarantee the permanence of rotation of the rotor (10) and in the same movement alternately raise the other of the mainsprings (14) which by releasing, the mainspring (14) presses one of the position controllers (15) which tumbles linkages (16) which act on the other slide (11), unhooks the second trigger (12) to escape the other ball (13) and releases the other mainspring (14).

2. The apparatus according to claim 1 **characterized in that** the launching axes (4) is provided with the non-return pivot (6) in which is mounted sliding-turning a conical gear (5).

3. The apparatus according to claim 1 **characterized in that** the launching axes (4) equipped with the slides (11) which, actuated by the mainsprings (14) and controlled by the position controllers (15) collaborate alternately with the triggers (12) to release each other of the mainsprings (14) to launch in rotation, the launcher axes (4) and in the same movement, slide axially, the conical gears (5).

4. The apparatus according to claim 1 and 3 **characterized in that** the conical gears (5), is precipitated violently in the direction of the axis of the rotor (7) by inserting itself in the footprint (8) and in a rotating motion, in the direction of rotation of the inertia wheels (9) to permanently force the rotation of the rotor (10).

5. The apparatus according to claim 1 **characterized in that** the position controllers (15) alternately tumble the linkages (16) which act on the slides (11) ensure the alternation of operation of the mainsprings (14).
